# EUROPÄISCHE PATENTANMELDUNG

(11) **EP 2 814 139 A1**
(43) Veröffentlichungstag der Anmeldung: **17.12.2014**
(21) Anmeldenummer: 13171846.2
(22) Anmeldetag: 13.06.2013
(51) Int. Cl.: H02K 1/16, H02K 1/20, H02K 5/20

(54) **Ständerblechpaket für einen Elektromotor**

(71) Anmelder: Siemens Aktiengesellschaft, 80333 München (DE)
(72) Erfinder: Gömmel, Gerhard, 92353 Postbauer-Heng (DE)

(57) **Zusammenfassung**

Ein Ständerblechpaket (1) für einen Elektromotor, umfassend eine Anzahl von gegeneinander isolierten Blechen (2), die derart miteinander verbunden sind, dass sie das mit einer im Wesentlichen zylinderförmigen Läuferöffnung (4) versehene Ständerblechpaket (1) bilden, wobei in eine Anzahl von Blechen (2) Aussparungen (8) eingebracht sind, soll eine technisch besonders einfache und gleichzeitig effektive Kühlung ermöglichen und damit eine besonders hohe Leistung des Elektromotors erlauben. Dazu sind Bleche (2) und Aussparungen (8) derart angeordnet, dass die Aussparungen (8) einen in Umfangsrichtung um die Achse des Ständerblechpakets (1) zumindest teilweise umlaufenden Hohlraum (12, 18) bilden.

## Beschreibung

Die Erfindung betrifft ein Ständerblechpaket für einen Elektromotor, umfassend eine Anzahl von gegeneinander isolierten Blechen, die derart miteinander verbunden sind, dass sie das mit einer im Wesentlichen zylinderförmigen Läuferöffnung versehene Ständerblechpaket bilden, wobei in eine Anzahl von Blechen Aussparungen eingebracht sind.

Elektromotoren dienen der Erzeugung mechanischer, üblicherweise rotatorischer Energie aus Elektrizität. In Elektromotoren wird die Kraft, die von einem Magnetfeld auf die stromdurchflossenen Leiter einer Spule ausgeübt wird, in Bewegung umgesetzt. Sie bestehen generell aus zwei Teilen, nämlich dem äußeren feststehenden Teil (Ständer oder Stator) und dem sich im Inneren bewegenden Teil (Läufer oder Rotor). Im Ständer befindet sich ein Blechpaket mit einzelnen untereinander isolierten magnetischen Blechen (dies dient der Vermeidung von Wirbelströmen). In die Bleche eingelassen sind drei um 120° versetzte Drahtwicklungen, deren Anfänge und Enden zu einem außen angebrachten Motorklemmbrett geführt sind.

Im Zentrum des Ständers befindet sich eine zylinderförmige Läuferöffnung, in die der bewegliche Läufer eingelassen ist. Dieser besteht aus einer Welle, die normalerweise an beiden axialen Enden in so genannten Lagerschilden gelagert ist. Auf dieser Welle befindet sich ebenfalls ein Blechpaket; wiederum bestehend aus untereinander isolierten Blechen.

Ständerblechpakete werden im Betrieb vergleichsweise heiß und der Elektromotor verliert dadurch an Leistung. Daher wird versucht, die Ständerblechpakete effektiv zu kühlen, typischerweise mit Luft oder, für eine stärkere Kühlung, mit Wasser. Bei Luftkühlung hat das Gehäuse des Stators in der Regel Kühlrippen, welche die Wärme, die vom Blechpaket über das Gehäuse übernommen wird, an die umströmende Luft abgeben. Eine weitere Möglichkeit ist die Einbringung von durchgehend gestanzten, in axialer Richtung erstreckten Kühlnuten in das Statorblechpaket. Diese werden, durch einen Lüfter mit Luft durchströmt.

Beim Bedarf noch höherer Kühlleistung erfolgt diese mit Flüssigkeiten, in der Regel mit Wasser. Verbreitet sind beispielsweise Motoren mit Wassermantelgehäuse, bei denen ein Stahlgehäuse für den Stator aus zwei Teilen gefertigt wird, wobei die beiden Teile miteinander verschweißt werden. Das Stahlgehäuse besteht aus einem inneren Zylinder, auf dem Stege für die Wasserführung aufgeschweißt oder eingearbeitet werden, und einem äußeren Zylinder. Das Wasser fließt also zwischen dem inneren und dem äußeren Zylinder. Ein derartiges doppelwandiges Konzept ist aber vergleichsweise aufwändig herzustellen und zudem teuer.

Alternativ dazu können Kühlrohre in das Blechpaket eingebracht werden, die zur Anbindung an das Paket vergossen, hochdruckgefügt oder, bei außenliegenden Kühlrohren auch eingerollt werden. Im Anschluss werden die Kühlrohre dann mittels Schweißen oder Löten verbunden. Auch hier ist die Fertigung vergleichsweise teuer. Bei allen Konzepten zur Wasserkühlung besteht zudem der Nachteil, dass die Kühlung nur indirekt auf das Blechpaket wirkt.

Es ist daher Aufgabe der Erfindung, ein Ständerblechpaket für einen Elektromotor der eingangs genannten Art anzugeben, welches eine technisch besonders einfache und gleichzeitig effektive Kühlung ermöglicht und damit eine besonders hohe Leistung des Elektromotors erlaubt.

Diese Aufgabe wird erfindungsgemäß gelöst, indem in eine Anzahl von Blechen Aussparungen eingebracht sind, wobei Bleche und Aussparungen derart angeordnet sind, dass die Aussparungen einen in Umfangsrichtung um die Achse des Ständerblechpakets zumindest teilweise umlaufenden Hohlraum bilden.

Die Erfindung geht dabei von der Überlegung aus, dass eine technisch besonders einfache und gleichzeitig effektive Kühlung dadurch erreicht werden könnte, dass die effektive Kühloberfläche des Ständerblechpaketes erhöht wird. Dies ist erreichbar, indem der oder die Hohlräume zumindest teilweise um den Umfang des Blechpakets herum verlaufen. Das Kühlmedium, z. B. Luft hat somit eine größere Angriffsfläche und kann mehr Wärme abtransportieren. Das Einbringen des Hohlraums kann dabei in besonders einfacher Weise bereits vor dem Paketieren der Bleche geschehen, indem entsprechende Aussparungen in die Bleche eingebracht, beispielsweise eingestanzt werden. Durch entsprechende Wahl der Form der Ausstanzungen und der Anordnung benachbarter Bleche zueinander kann so ein entsprechender umlaufender Hohlraum gebildet werden.

Vorteilhafterweise läuft der Hohlraum einmal vollständig um die Achse des Ständerblechpaketes um. Hierdurch ergibt sich eine Führung für das Kühlmedium, so dass statt Luft z.B. auch Wasser als Kühlmedium verwendet werden kann, ohne dass aufwändige Verteil- und Sammelsysteme für das Kühlmedium notwendig wären. Durch einen wenigstens einmal oder auch mehrmals, z.B. in der Art einer Spirale umlaufenden Hohlraum wird eine gleichmäßige Kühlung entlang des gesamten Umfangs des Blechpaketes erreicht.

In einer ersten vorteilhaften Ausgestaltung bildet der jeweilige Hohlraum einen Kanal, der im Inneren des Ständerblechpakets verläuft. Der Kanal bildet eine geschlossene Kühlwendel, die das Ständerblechpaket durchzieht. Die ist beispielsweise bei gehäuselosen Motoren von Vorteil, die keine Abdichtung nach außen aufweisen.

In alternativer oder zusätzlicher Ausgestaltung bildet der jeweilige Hohlraum eine Nut, die entlang des Umfangs des Ständerblechpakets verläuft. Hierbei ist eine Vielzahl von Anordnungen möglich. Je nach Bedarf können unterschiedliche Kühlnuten erzeugt werden, die ein- oder mehrfach um das Ständerblechpaket verlaufen. Auch die Dicke der Kühlnuten kann variiert werden, indem eine unterschiedliche Anzahl von Blechen mit entsprechenden Aussparungen verbunden wird.

In weiterer vorteilhafter Ausgestaltung bilden die Aussparungen eine Mehrzahl von Hohlräumen, die in der Art einer mehrgängigen Spirale angeordnet sind. Hierdurch wird eine besonders effektive Kühlung erreicht, die besonders gleichmäßig entlang des Umfangs wirkt. Die Spiralform sorgt hierbei für eine effektive Verteilung der Kühlleistung. Die Anzahl der Gänge der Spirale kann je nach Auslegung gewählt werden: Eine höhere Anzahl verbessert die Kühlleistung, erhöht aber auch die Komplexität hinsichtlich des Anschlusses.

Vorteilhafterweise weist eine Mehrzahl von Blechen des Blechpakets deckungsgleiche, d. h. im Wesentlichen identische Aussparungen auf, und die Bleche sind in Umfangsrichtung versetzt zueinander angeordnet. Dadurch ist nur eine einzige Form auszustanzen, was den Herstellungsprozess weiter vereinfacht.

In weiterer vorteilhafter Ausgestaltung sind die Bleche gruppenweise deckungsgleich angeordnet. Mit anderen Worten: Auch bei Blechen mit deckungsgleichen Aussparungen erfolgt kein Versatz in Umfangsrichtung bei jedem Blech, sondern es werden einige Bleche deckungsgleich angeordnet und danach folgt ein weiteres Paket von Blechen, die in Umfangsrichtung verdreht sind. Dadurch ergibt sich eine stufenartige Form der Nuten oder Kühlkanäle. Die Herstellung des Blechpakets wird dadurch weiter vereinfacht, da die Bleche nur paketweise in Umfangsrichtung versetzt werden müssen.

In weiterer vorteilhafter Ausgestaltung ist eine Mehrzahl von Aussparungen in das jeweilige Blech radialsymmetrisch eingebracht. Mit anderen Worten: Das jeweilige Blech ist so ausgestaltet, dass es bei einer Drehung um einen gewissen Winkel um die Mittelachse wieder mit sich selbst zur Deckung kommt. Dies vereinfacht den Herstellungsprozess beispielsweise durch Stanzen erheblich.

Der Außenumfang eines Ständerblechpakets ist nicht notwendigerweise rund, sondern kann auch eine beispielsweise quadratische Form haben. In einem derartigen Fall, in dem die Bleche im Wesentlichen die Form eines gleichseitigen n-Ecks aufweisen, ist ein beliebiges Verdrehen der einzelnen Bleche in Umfangsrichtung vergleichsweise kompliziert, da die Außenform ebenfalls entsprechend angepasst werden müsste. Bei derartigen Blechen erstreckt sich vorteilhafterweise eine sich identisch in eine Mehrzahl von Blechen eingebrachte Aussparung über einen Winkel von mehr als n/n entlang des Umfangs. Durch eine Aussparung in dieser Ausdehnung ist gewährleistet, dass durch Drehen des Blechs um einen Winkel von 2n/n in Kombination mit Wenden des jeweiligen Blechs in jedem Winkelbereich ein entsprechender Überlapp von Aussparungen bei deckungsgleicher Außenform erreicht wird, so dass ein umlaufender Hohlraum gebildet werden kann.

Ein Verfahren zur Herstellung eines Ständerblechpakets umfasst vorteilhafterweise die Verfahrensschritte:
- Ausstanzen der mit Backlack beschichteten Bleche des Ständerblechpakets oder Ausstanzen der Bleche des Ständerblechpakets und Beschichten der Bleche mit einem Backlack,
- Aufstapeln der Bleche zum Ständerblechpaket,
- Verbacken der Bleche durch Erhitzen oder Behandlung mit einem Lösemittel.

Das Verbacken der Bleche mit Backlack hat den Vorteil, dass die Bleche zueinander verklebt sind und so der Hohlraum zum Wicklungsbereich und bei Kühlkanälen auch zum Außenbereich abgedichtet wird, ohne dass zusätzliche Maßnahmen zur Abdichtung erforderlich werden.

Ein Ständer für einen Elektromotor umfasst vorteilhafterweise ein beschriebenes oder mit dem beschriebenen Verfahren hergestelltes Ständerblechpaket.

In vorteilhafter Ausgestaltung umfasst der Ständer dabei ein umschließendes Gehäuse mit über einem Endbereich des jeweiligen Hohlraums angeordneten Zugangsöffnungen. Durch die Zugangsöffnungen können die Nuten oder Kühlkanäle mit Kühlmedium beaufschlagt werden. Am Gehäuse können die Zugangsöffnungen flexibel positioniert werden, so dass variable Geometrien von Kühlnuten oder -kanälen möglich sind. Beispielsweise können Zugangsöffnungen auch an Zwischenflanschen angeordnet sein.

Alternativ oder zusätzlich können die Hohlräume für das Kühlmittel auch vom axialen Ende des Ständerblechpakets her mit Kühlmittel beaufschlagt werden. Hierzu umfasst der Ständer vorteilhafterweise ein an einem axialen Ende des Ständerblechpakets, zur Lagerung eines Läufers des Elektromotors ausgebildetes Lagerschild mit über einem Endbereich des jeweiligen Hohlraums angeordneten Zugangsöffnungen. Dies ist insbesondere bei Kühlkanälen im Inneren des Ständerblechpakets von Vorteil.

Ein Elektromotor umfasst vorteilhafterweise einen zuvor beschriebenen und oder einen mit dem zuvor beschriebenen Verfahren hergestellten Ständer. Ein derartiger Elektromotor weist nämlich trotz einfacher Herstellung aufgrund der verbesserten Kühlung eine besonders hohe Leistung auf.

Die mit der Erfindung erzielten Vorteile bestehen insbesondere darin, dass durch die Einbringung eines umlaufenden Hohlraums in das Blechpaket des Ständers eines Elektromotors eine besonders effektive Kühlung direkt im Blechpaket in technisch besonders einfacher Weise erreicht wird und so dessen Leistung erhöht wird. Die entsprechenden Aussparungen in den Blechen können dabei bereits beim Stanzen der Bleche eingebracht werden. Durch das Verbacken der Bleche mittels aufgebrachten Backlack wird dieser Vorteil besonders aufwandsarm erzielt, da keine zusätzliche Abdichtung des jeweiligen Hohlraums nötig ist. Zusätzliches Schweißen ist nicht erforderlich, wodurch auch Verzug verhindert wird.

Weiterhin ermöglicht das beschriebene Prinzip auch eine hohe Flexibilität hinsichtlich der Anordnung der Kühlhohlräume. Elektromotoren mit einem derartigen Ständerblechpaket sind auch besonders wartungsfreundlich, da das Ständerblechpaket bei einem Defekt ausgepresst werden kann. Insgesamt führt die beschriebene Erfindung zu einer großen Kostenersparnis und verkürzten Herstellungszeit im Vergleich zu bisherigen gekühlten Elektromotoren.

Ausführungsbeispiele der Erfindung werden anhand einer Zeichnung näher erläutert. Darin zeigen:
- FIG 1: ein ausgestanztes Blech für einen Ständer eines Elektromotors mit einer Aussparung für eine eingängige Kühlnut,
- FIG 2: das aus Blechen nach FIG 1 zusammengesetzte Ständerblechpaket in radialer Aufsicht,
- FIG 3: ein ausgestanztes Blech für einen Ständer eines Elektromotors mit einer Aussparung für eine zweigängige Kühlnut,
- FIG 4: das aus Blechen nach FIG 3 zusammengesetzte Ständerblechpaket im Schnitt,
- FIG 5: ein ausgestanztes Blech für einen Ständer eines Elektromotors mit einer Aussparung für eine dreigängige Kühlnut,
- FIG 6: das aus Blechen nach FIG 5 zusammengesetzte Ständerblechpaket in radialer Aufsicht,
- FIG 7: ein ausgestanztes Blech mit runder Außenform für einen Ständer eines Elektromotors mit einer Aussparung für einen innenliegenden Kühlkanal,
- FIG 8: ein ausgestanztes Blech mit im Wesentlichen quadratischer Außenform für einen Ständer eines Elektromotors mit einer Aussparung für einen innenliegenden Kühlkanal,
- FIG 9: ein ausgestanztes Blech mit im Wesentlichen quadratischer Außenform für einen Ständer eines Elektromotors mit nicht vollständig umlaufenden Kühlnuten,
- FIG 10: das aus Blechen nach FIG 9 zusammengesetzte Ständerblechpaket, und
- FIG 11: ein aus Blechen mit im Wesentlichen runder Außenform mit nicht vollständig umlaufenden Kühlnuten zusammengesetztes Ständerblechpaket.

Gleiche Teile sind in allen Figuren mit denselben Bezugszeichen versehen.

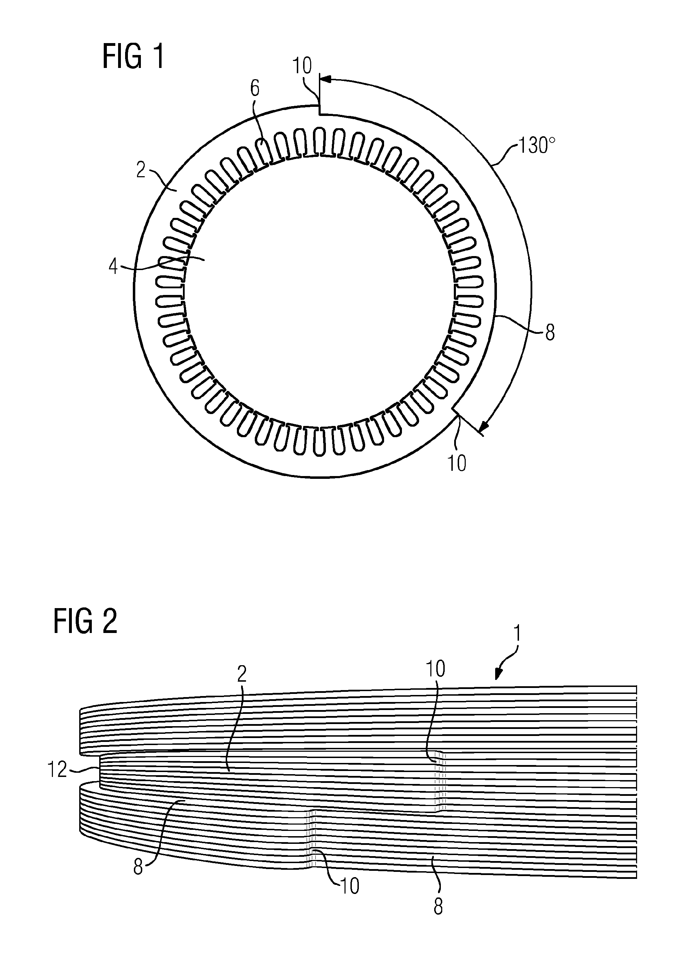

FIG 1 zeigt ein für ein Ständerblechpaket 1 für einen Elektromotor vorbereitetes Blech 2. Es weist eine im Wesentlichen runde Außenform auf. Im Zentrum ist eine kreisrunde Läuferöffnung 4 für den nicht gezeigten Läufer des Elektromotors angeordnet. Das Blech 2 wird aus einem ca. 0,5 Millimeter dicken Blechstreifen ausgestanzt.

Entlang des Umfanges der Läuferöffnung 4 sind in radialer Richtung erstreckte Nuten 6 eingebracht. Diese verjüngen sich im Ausführungsbeispiel nach innen hin, können jedoch auch anders ausgestaltet sein. In die Nuten 6 werden die Drahtwicklungen des Ständers eingebracht, nämlich drei um 120° versetzte Drahtwicklungen, deren Anfänge und Enden zu einem außen angebrachten Motorklemmbrett geführt sind. Diese erzeugen das für die Bewegung des Elektromotors notwendige magnetische Feld.

Entlang des Außenumfangs des Blechs 2 ist eine Aussparung 8 eingebracht, die sich mit konstanter Tiefe kontinuierlich über einen Winkelbereich von 130° erstreckt und in Umfangsrichtung von Kanten 10 begrenzt wird. Diese dient zur Führung von Kühlmittel im Ständerblechpaket 1, wie im Folgenden erläutert wird.

Mehrere deckungsgleiche, d. h. identische Bleche nach FIG 1 werden aus mit Backlack beschichtetem Blech hergestellt. Die Bleche werden dann zu einem Ständerblechpaket paketiert und durch Hitze und Druck oder ein Lösungsmittel miteinander verbacken. Dadurch entsteht das kompakte Ständerblechpaket 1, das ausschnittsweise in der Aufsicht aus radialer Richtung in FIG 2 gezeigt ist. Dieses wird im Anschluss mit Draht bewickelt und imprägniert.

FIG 2 zeigt mehr als dreißig Bleche 2, die nach dem in FIG 1 gezeigten Muster gestanzt und aufeinander paketiert sind. Die Bleche 2 sind in drei Gruppen unterteilt. Jede der Gruppen besteht aus zehn oder mehr deckungsgleich übereinander geschichteten Blechen 2. Die Gruppen sind jeweils um 120° gegeneinander in Umfangsrichtung versetzt. Dadurch überlappen sich die Aussparungen 8, wie in FIG 1 gezeigt, und bilden so eine vollständig um das Ständerblechpaket 1 umlaufende Nut 12. An den Überlappstellen mit den Kanten 8 bildet sich dabei die in FIG 2 gezeigte Stufe. Wird das Ständerblechpaket 1 von einem Gehäuse umschlossen, bildet die Nut 12 einen Hohlraum, in dem Kühlmittel geführt werden kann. Durch das Verbacken der Bleche 2 ist die Nut 12 abgedichtet.

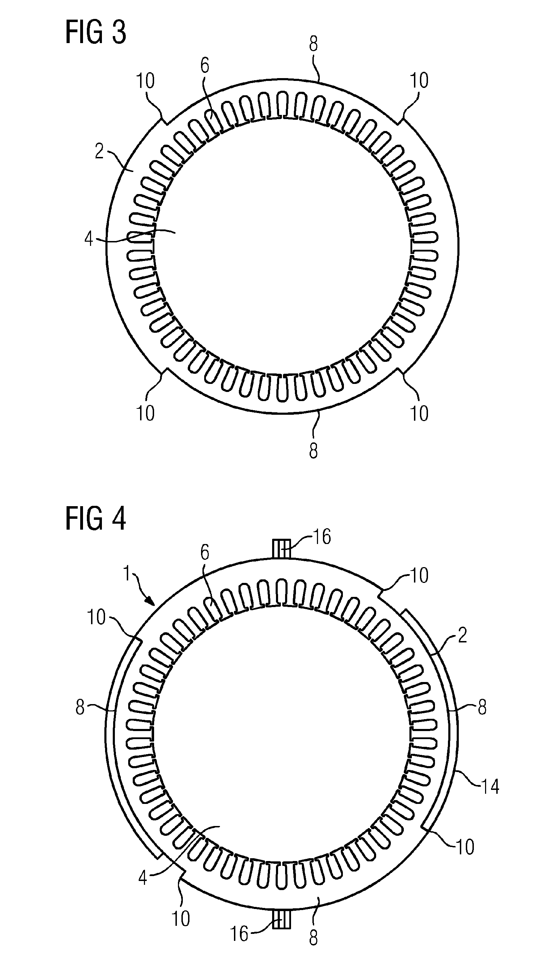

Eine weitere Ausführungsform eines Blechs 2 ist in FIG 3 gezeigt. Im Unterschied zu FIG 1 sind hier zwei bezogen auf den Mittelpunkt der Läuferöffnung 4 gegenüberliegende Aussparungen 8 eingebracht, die sich jeweils mit konstanter Tiefe kontinuierlich über einen Winkelbereich von etwa 90° erstrecken und in Umfangsrichtung von Kanten 10 begrenzt werden.

Die Anordnung dieser Bleche 2 ist in FIG 4 gezeigt, hier im Schnitt durch das Ständerblechpaket 1. Analog zu FIG 3 sind mehrere Gruppen von deckungsgleichen Blechen vorgesehen, die gegeneinander in Umfangsrichtung verdreht sind. FIG 4 zeigt das Blech 2 in der Lage einer ersten Gruppe aus FIG 3 und gestrichelt dazu die Lage einer benachbarten Gruppe. Auch hier ist die Lage der Gruppen derart, dass sich die Aussparungen 8 leicht überschneiden, so dass eine durchgehende Nut 12 gebildet wird. Durch die doppelten Aussparungen 8 entstehen zwei Nuten 12, die in der Art einer zweigängigen, gestuften Spirale um das Ständerblechpaket 1 umlaufen.

Das Ständerblechpaket 1 ist von einem zylindrischen Gehäuse 14 passgenau umgeben. Das Gehäuse 14 dichtet die Nuten 12 nach außen ab. Kühlmittel, z. B. Wasser, wird durch Zugangsöffnungen 16 im Gehäuse 14 ein- und abgeleitet. Die Zugangsöffnungen sind gegenüberliegend im Gehäuse 14 angeordnet.

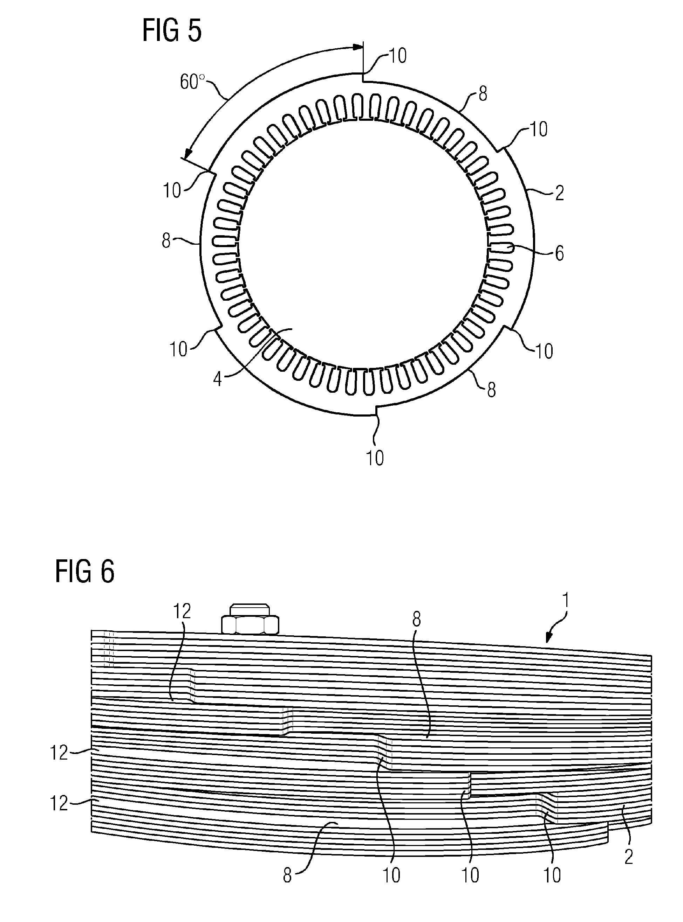

Eine dritte Ausführungsform mit Nuten 12 entlang des Außenumfangs des Ständerblechpakets 1 ist in den FIG 5 und 6 gezeigt, die nur anhand ihrer Unterschiede zu FIG 1 bzw. 2 erläutert werden. In das Blech 2 der FIG 5 sind insgesamt drei Aussparungen 8 eingebracht, die sich jeweils mit konstanter Tiefe kontinuierlich über einen Winkelbereich von etwa 60° erstrecken und in Umfangsrichtung von Kanten 10 begrenzt werden.

Die Anordnung dieser Bleche 2 ist in FIG 6 gezeigt, hier wieder in einer radialen Aufsicht. FIG 6 zeigt mehr als dreißig Bleche 2, die nach dem in FIG 5 gezeigten Muster gestanzt und aufeinander paketiert sind. Die Bleche 2 sind in sieben Gruppen unterteilt. Jede der Gruppen besteht aus sechs deckungsgleich übereinander geschichteten Blechen 2. Die Gruppen sind jeweils gegeneinander in Umfangsrichtung derart versetzt, dass sich die Aussparungen 8 leicht überschneiden, so dass eine durchgehende Nut 12 gebildet wird. Durch die dreifachen Aussparungen 8 entstehen drei Nuten 12, die in der Art einer dreigängigen, gestuften Spirale um das Ständerblechpaket 1 umlaufen.

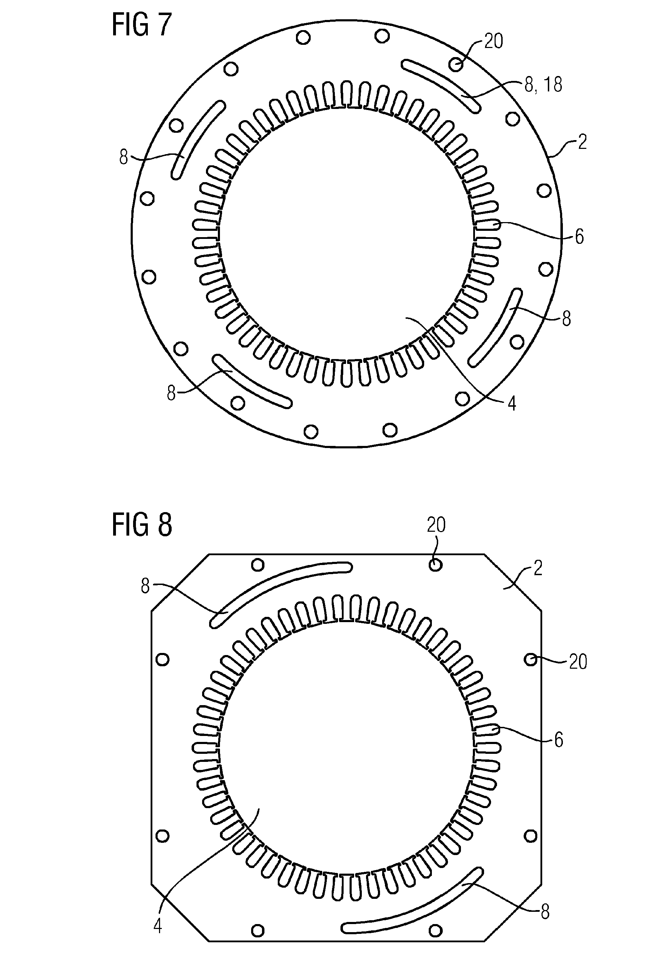

Eine weitere Ausführungsform ist in FIG 7 gezeigt. Gegenüber der FIG 1 weist das Blech 2 gemäß der FIG 7 jedoch vier Aussparungen 8 auf. Diese sind jedoch in beide radiale Richtungen von dem Blech 2 umschlossen, sind also im Inneren angeordnet und nicht am Rand des Blechs 2. Dadurch ergibt sich anstatt einer Nut 12 ein im Inneren des Ständerblechpakets 1 angeordneter Kanal 18. Die Aussparungen 8 sind radialsymmetrisch eingebracht und erstrecken sich in Umfangsrichtung über einen Winkelbereich von mehr als 25°. Am Außenumfang des Blechs 2 sind in Winkelabständen von 22,5° Schraublöcher eingebracht.

Wie in den übrigen Figuren sind mehrere Gruppen von deckungsgleichen Blechen vorgesehen, die gegeneinander jeweils um 22,5° in Umfangsrichtung verdreht sind, so dass die Schraublöcher in Deckung kommen. FIG 7 zeigt das Blech 2 in der Lage einer ersten Gruppe und gestrichelt dazu die Lage einer benachbarten und einer weiteren, der benachbarten Gruppe benachbarten Gruppe. Auch hier ist die Lage der Gruppen derart, dass sich die Aussparungen 8 leicht überschneiden, so dass ein durchgehender Kanal 18 gebildet wird. Durch die vierfachen Aussparungen 8 entstehen vier Kanäle 18, die in der Art einer viergängigen, gestuften Spirale um das Ständerblechpaket 1 umlaufen.

Die Beaufschlagung der Kanäle 18 mit Kühlmedium kann über entsprechend ausgebildete Lagerschilde erfolgen, die an den axialen Enden des Ständerblechpakets 1 angeordnet sind und über entsprechende Anschlüsse verfügen.

Eine weitere Ausführungsform ist in FIG 8 gezeigt. Das dort gezeigte Blech 2 hat gegenüber FIG 7 eine quadratische Außenform mit abgeschrägten Ecken. Es sind auf einem Radius um die Läuferöffnung 4 insgesamt acht Schraublöcher im Winkelabstand von 45° eingestanzt. Gegenüber der FIG 7 weist das Blech 2 gemäß der FIG 8 nur zwei gegenüberliegende Aussparungen 8 auf. Diese sind ebenfalls in beide radiale Richtungen von dem Blech 2 umschlossen, sind also im Inneren angeordnet und nicht am Rand des Blechs 2. Dadurch ergibt sich wiederum ein im Inneren des Ständerblechpakets 1 angeordneter Kanal 18. Die Aussparungen 8 sind radialsymmetrisch eingebracht und erstrecken sich in Umfangsrichtung über einen Winkelbereich von mehr als 45°.

Wie in den übrigen Figuren sind mehrere Gruppen von deckungsgleichen Blechen vorgesehen. Die Gruppen sind in folgender Weise benachbart aneinander angeordnet: Die erste Gruppe ist in der in FIG 8 gezeigten Lage angeordnet. Die zweite Gruppe ist demgegenüber um 180° gestürzt, d. h. entlang der Hochachse, die von den Aussparungen 8 geschnitten wird, gewendet. Die dritte Gruppe ist gegenüber der ersten Gruppe um 90° gedreht. Die vierte Gruppe ist ebenso wie die zweite Gruppe gestürzt und um 90° gedreht, usw. Auch hier ist somit die Lage der Gruppen derart, dass sich die Aussparungen 8 leicht überschneiden, so dass ein durchgehender Kanal 18 gebildet wird. Durch die zweifachen Aussparungen 8 entstehen zwei Kanäle 18, die in der Art einer zweigängigen, gestuften Spirale um das Ständerblechpaket 1 umlaufen.

In jeder Figur ist es möglich, die verdrehte Schichtung der Gruppen praktisch beliebig fortzusetzen, so dass beliebig dicke Ständerblechpakete 1 erzeugt werden können.

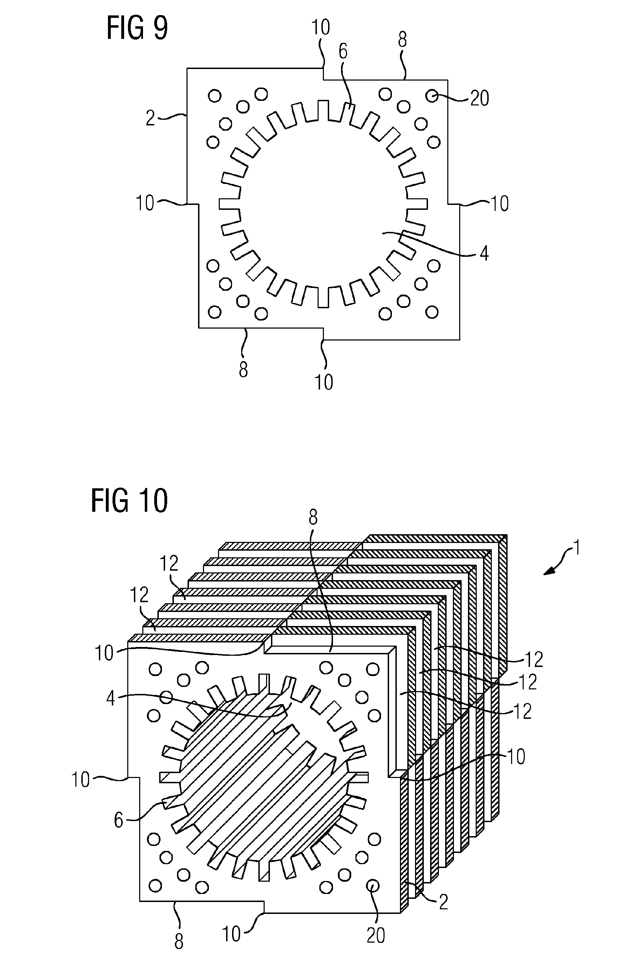

Alternative Ausführungsformen mit nicht vollständig umlaufenden Nuten 12 sind in den FIG 9 bis 11 gezeigt. FIG 9 zeigt ein ausgestanztes Blech mit im Wesentlichen quadratischer Außenform für einen Ständer eines Elektromotors. Es sind auf zwei verschiedenen Radien um die Läuferöffnung 4 mehrere Schraublöcher 20 eingestanzt. Das Blech 2 weist Aussparungen 8 auf, die sich jeweils von der Hälfte einer Seite des Quadrats bis zur Hälfte einer benachbarten Seite über eine Ecke hinweg erstrecken. Die Aussparungen 8 sind dabei radialsymmetrisch eingebracht.

Wie in den übrigen Figuren sind mehrere Gruppen von deckungsgleichen Blechen vorgesehen, wie in FIG 10 gezeigt. Die Gruppen sind in folgender Weise benachbart aneinander angeordnet: Die erste Gruppe ist in der in FIG 9 gezeigten Lage angeordnet. Die zweite Gruppe ist gegenüber der ersten Gruppe um 90° gedreht. Die dritte Gruppe ist ebenso wie die erste Gruppe angeordnet usw. Im Gegensatz zu den vorigen Ausführungsformen sind die Lage der Gruppen und die Form der Aussparungen 8 derart, dass die Aussparungen 8 benachbarter Gruppen sich nicht überschneiden. Es ergibt sich somit keine vollständig umlaufende Nut 12, sondern eine Mehrzahl gegenüberliegender Nuten 12, die sich um 90° entlang des Umfangs erstrecken.

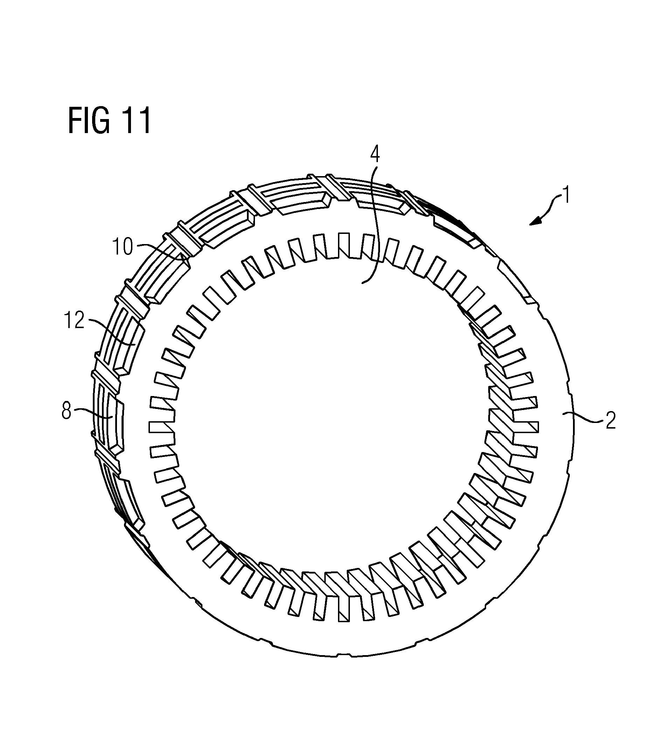

Eine ähnliche Ausführungsform mit im Wesentlichen runder Außenform ist in FIG 11 gezeigt. Dargestellt ist ein aus Blechen mit nicht vollständig umlaufenden Kühlnuten zusammengesetztes Ständerblechpaket 1. Bis auf die Aussparungen 8 sind die jeweiligen Bleche 2 des Ständerblechpakets 1 wie in FIG 1 ausgestaltet. Die Aussparungen 8 sind nur auf einer Hälfte des Kreises eingebracht. Hier sind auf der gestanzten Hälfte am Außendurchmesser insgesamt neun gleichmäßig beabstandete Aussparungen 8 eingebracht, die sich über jeweils ca. 15° entlang des Umfangs erstrecken.

Auch hier sind mehrere Gruppen von deckungsgleichen Blechen vorgesehen. Die Gruppen sind in folgender Weise benachbart aneinander angeordnet: Die erste Gruppe ist deckungsgleich in einer vorgegebenen Lage angeordnet. Die zweite Gruppe ist gegenüber der ersten Gruppe um 180° gedreht. Die dritte Gruppe ist ebenso wie die erste Gruppe angeordnet usw. Wie in FIG 10 ist die Lage der Gruppen und die Form der Aussparungen 8 derart, dass die Aussparungen 8 benachbarter Gruppen sich nicht überschneiden. Es ergibt sich auch hier somit keine vollständig umlaufende Nut 12, sondern eine Mehrzahl von Nuten 12, die sich um 15 entlang des Umfangs erstrecken.

Die Ausführungsformen der FIG 9 bis 11 eignen sich insbesondere für eine Luftkühlung, da keine kontinuierlich umlaufenden Hohlräume für die Führung eines flüssigen Kühlmittels vorhanden sind. Durch die Erhöhung der Außenfläche wird die Kühlwirkung durch Luft entschieden verbessert. Auch kann hierbei die Nutzung mit Backlack beschichteter Bleche 2 entfallen und es können auch Bleche 2 verwendet werden, die nicht mit Backlack beschichtet sind, da keine Dichtigkeit für flüssige Kühlmedien gegeben sein muss.

## Patentansprüche

1. Ständerblechpaket (1) für einen Elektromotor, umfassend eine Anzahl von gegeneinander isolierten Blechen (2), die derart miteinander verbunden sind, dass sie das mit einer im Wesentlichen zylinderförmigen Läuferöffnung (4) versehene Ständerblechpaket (1) bilden, wobei in eine Anzahl von Blechen (2) Aussparungen (8) eingebracht sind, wobei Bleche (2) und Aussparungen (8) derart angeordnet sind, dass die Aussparungen (8) einen in Umfangsrichtung um die Achse des Ständerblechpakets (1) zumindest teilweise umlaufenden Hohlraum (12, 18) bilden.

2. Ständerblechpaket (1) nach Anspruch 1, bei dem der Hohlraum (12, 18) einmal vollständig um die Achse des Ständerblechpaketes (1) umläuft.

3. Ständerblechpaket (1) nach einem der vorhergehenden Ansprüche, bei dem der jeweilige Hohlraum (12, 18) einen Kanal (18) bildet, der im Inneren des Ständerblechpakets (1) verläuft.

4. Ständerblechpaket (1) nach einem der vorhergehenden Ansprüche, bei dem der jeweilige Hohlraum (12, 18) eine Nut (12) bildet, die entlang des Umfangs des Ständerblechpakets (1) verläuft.

5. Ständerblechpaket (1) nach einem der vorhergehenden Ansprüche, bei dem die Aussparungen (8) eine Mehrzahl von Hohlräumen (12, 18) bilden, die in der Art einer mehrgängigen Spirale angeordnet sind.

6. Ständerblechpaket (1) nach einem der vorhergehenden Ansprüche, bei dem eine Mehrzahl von Blechen (2) deckungsgleiche Aussparungen (8) aufweisen und in Umfangsrichtung versetzt zueinander angeordnet ist.

7. Ständerblechpaket (1) nach einem der vorhergehenden Ansprüche, bei dem die Bleche (2) gruppenweise deckungsgleich angeordnet sind.

8. Ständerblechpaket (1) nach einem der vorhergehenden Ansprüche, bei dem in das jeweilige Blech (2) eine Mehrzahl von Aussparungen (8) radialsymmetrisch eingebracht ist.

9. Ständerblechpaket (1) nach einem der vorhergehenden Ansprüche, dessen Bleche (2) im Wesentlichen die Form eines gleichseitigen n-Ecks aufweisen, und bei dem eine sich identisch in eine Mehrzahl von Blechen (2) eingebrachte Aussparung (8) sich über einen Winkel von mehr als n/n entlang des Umfangs erstreckt.

10. Verfahren zur Herstellung eines Ständerblechpakets (1) nach einem der vorhergehenden Ansprüche, umfassend die Verfahrensschritte:
- Ausstanzen der mit Backlack beschichteten Bleche (2) des Ständerblechpakets (1) oder Ausstanzen der Bleche (2) des Ständerblechpakets (1) und Beschichten der Bleche (2) mit einem Backlack,
- Aufstapeln der Bleche (2) zum Ständerblechpaket (1),
- Verbacken der Bleche (2) durch Erhitzen oder Behandlung mit einem Lösemittel.

11. Ständer für einen Elektromotor mit einem Ständerblechpaket (1) nach einem der Ansprüche 1 bis 9 und/oder hergestellt mit dem Verfahren 10.

12. Ständer nach Anspruch 11, umfassend ein das Ständerblechpaket (1) umschließendes Gehäuse (14) mit über einem Endbereich des jeweiligen Hohlraums (12,18) angeordneten Zugangsöffnungen (16).

13. Ständer nach Anspruch 11 und 12, umfassend ein an einem axialen Ende des Ständerblechpakets (1), zur Lagerung eines Läufers des Elektromotors ausgebildetes Lagerschild mit über einem Endbereich des jeweiligen Hohlraums (12, 18) angeordneten Zugangsöffnungen.

14. Elektromotor mit einem Ständer nach einem der Ansprüche 11 bis 13.
